# EUROPÄISCHE PATENTSCHRIFT

(11) **EP 0 477 522 B1**
(45) Veröffentlichungstag und Bekanntmachung des Hinweises auf die Patenterteilung: **14.12.1994**
(21) Anmeldenummer: 91113572.1
(22) Anmeldetag: 13.08.1991
(51) Int. Cl.: F28F 9/26, F16L 41/08

(54) **Röhrenheizkörper und Verfahren zu dessen Herstellung**
Tube radiator and process for its manufacture
Radiateur à tubes et procédé pour sa fabrication

(30) Priorität: 25.09.1990 DE 4030318
(43) Veröffentlichungstag der Anmeldung: 01.04.1992
(73) Patentinhaber: KERMI GmbH, 94447 Plattling (DE)
(72) Erfinder: Stannek, Siegfried, W-8351 Neuhausen (DE)
(74) Vertreter: Schwabe - Sandmair - Marx

(56) Entgegenhaltungen:
- EP-A- 0 325 452
- DE-A- 2 846 999
- DE-A- 3 124 353
- FR-A- 1 223 503
- US-A- 2 229 266
- US-A- 2 636 752
- US-A- 3 262 497
- US-A- 3 516 692
- Prospekt der Fa. Arbonia, Raumwärmer in Bestform, Röhrenradiatoren

## Beschreibung

Die Erfindung betrifft einen Röhrenheizkörper nach dem Oberbegriff des Anspruchs 1 und ein zugehöriges Herstellungsverfahren nach dem Oberbegriff des Anspruchs 19.

Bei Heizkörpern unterscheidet man grundsätzlich zwischen Röhrenheizkörpern, Gliederheizkörpern und Plattenheizkörpern. Wie aus den Bezeichnungen bereits hervorgeht, werden bei einem Röhrenheizkörper die Strömungskanäle durch Rohrwandungen gebildet, während bei einem Glieder- oder Plattenheizkörper die Strömungskanäle von plattenförmigen Begrenzungswänden begrenzt bzw. gebildet sind. Ein Röhrenheizkörper ist nicht nur wegen seiner großen Druckbelastbarkeit vorteilhaft, sondern ein Röhrenheizkörper ist auch in der Regel aufgrund der Verwendung von runden Verbindungsröhren mit gerundeten Kanten und Ecken gebildet, wodurch die Verletzungsgefahr insbesondere für Kinder wesentlich reduziert ist. Eine erstrebenswerte große Oberfläche ergibt sich bei einem Röhrenheizkörper aufgrund seiner gitterförmigen Bauweise. Durch Variation der Anzahl der Röhren, Ausbildung von gitterartigen Röhrenanordnungen und dergleichen, ergibt sich für den Konstrukteur eine Vielfalt von Gestaltungsmöglichkeiten. Die Verwendung von runden Rohren bzw. Röhren führt jedoch zu schwierigen Formgebungen im Bereich der Verbindungsstellen, wodurch die Herstellung eines Röhrenheizkörpers erschwert ist und erhöhte Kosten vorgegeben sind. Solche Heizkörper sind beispielsweise aus dem Prospekt "Raumwärmer in Bestform, Röhrenradiatoren" der Firma Arbonia, Schweiz, bekannt und werden nachfolgend nochmals explizit erörtert.

Rohrenheizkörper bestehen aus Kopfteilen, Fußteilen und den diese miteinander verbindenden Verbindungsröhren, wobei die Kopf- und Fußteile durch Verbindungsstücke gebildet sind, die diese Verbindungsröhren miteinander verbinden, aber auch untereinander zu einem gemeinsamen Sammelkanal für den Vor- und Rücklauf verbunden werden. Bei einem auf dem Markt bekannten Röhrenheizkörper bestehen die Kopf- und Fußteile jeweils aus einem Formteil, das jeweils aus zwei Blechhälften zusammengesetzt und verschweißt ist. Zu beiden Seiten der Teilungsebene der Blechhälften sind koaxial zueinander Strömungsöffnungen in den Formteilen vorgesehen, so daß mehrere Formteile nebeneinander angeordnet werden können und dabei ein Kopf- oder Fußteil des Röhrenheizkörpers bilden. Auf den einander zugewandten Seiten des Kopf- und Fußteils weisen die Formteile zwei oder mehrere sich jeweils in einer quer zum Heizkörper erstreckenden Reihe angeordnete Rohrstümpfe für die in entsprechender Anzahl vorhandenen Verbindungsröhren auf, die mit den Rändern der Rohrstümpfe verschweißt sind. Bei dieser bekannten Ausgestaltung schließen die Verbindungsröhren seitlich bzw. tangential an das zugehörige Verbindungsstück an. Außerdem ist die Herstellung dieses bekannten Röhrenheizkörpers mit einem großen Aufwand verbunden. Dies ist zum einen dadurch vorgegeben, daß das Verbindungsstück aus zwei Blechhälften besteht, die zusammengesetzt und im Abbrennstumpfschweißverfahren miteinander verschweißt werden. Zum anderen ergeben sich bei dieser bekannten Ausgestaltung Schwierigkeiten beim Ansetzen der beiden miteinander zu verschweißenden Teile aneinander. Es sind zunächst geringe Toleranzen einzuhalten, um bei einer Wandstärke von etwa 1,5 mm eine Formpassung und glatte Übergänge zu erreichen. Dabei ist zu berücksichtigen, daß im Bereich der Teilungsfugennaht der Blechhälften in der Regel eine unregelmäßig geformte Anlagefläche für den Endrand der Verbindungsröhre vorhanden ist, so daß letztere nicht in der für eine dichte und saubere Verschweißung erforderlichen Position an das Verbindungstück zum Verschweißen angesetzt werden kann. Die Folgen sind ein schwieriger Schweißvorgang und unsaubere Schweißnähte, die nachgearbeitet werden müssen, um ein angestrebtes gutes Aussehen der Schweißverbindung bzw. des Röhrenheizkörpers zu erreichen.

Aus der DE-A-28 46 999 ist ein Verfahren zur Herstellung von Rohrheizkörpern und Rohrheizkörper, welche nach diesem Verfahren hergestellt sind, bekannt. Gemäß diesem Verfahren wird vorgeschlagen, in einen Sammelrohrabschnitt, der einem Glied eines Röhrenheizkörpers entspricht, Öffnungen zu bohren, die dem Außendurchmesser der einzelnen Heizröhren entsprechen. Die einzelnen Heizröhren werden entsprechend dem Innenumfang des Sammelrohres unterschiedlich abgelängt, in die Bohrungen eingesetzt und am Innenumfang des Sammelrohrabschnittes über eine Schweißnaht mit dem Sammelrohrabschnitt verbunden. Hierdurch soll eine unschöne Schweißnaht aus dem Sichtfeld des Betrachters entzogen werden. Allerdings führt diese Art der Herstellung eines Röhrenheizkörpers zu einer komplizierten und arbeitsaufwendigen Verfahrensweise, da im Inneren des Sammelrohres eine bzw. eine Vielzahl von Schweißnahten vorzusehen sind, um die Heizröhren mit dem Sammelrohr zu verbinden. Einfache und vorteilhafte Schweißverfahren lassen sich hier nicht anwenden.

Der Erfindung liegt die Aufgabe zugrunde, einen Röhrenheizkörper bzw. ein zugehöriges Herstellungsverfahren der eingangs angegebenen Art so auszugestalten, daß der Herstellungsaufwand verringert, das Schweißen vereinfacht und eine saubere Schweißnaht erreicht wird.

Diese Aufgabe wird durch die Merkmale des Anspruchs 1 bzw. des Anspruchs 19 gelöst.

Während beim Stand der Technik die Anlageringzone des Verbindungsstücks in einer gekrümmten Fläche liegt, liegt sie gemäß der Erfindung in einer Ebene. Dies ermöglicht den vorteilhaften Einsatz des Preßstumpf- oder Buckelschweißens, DIN 1910 Bl.2 (März 1967).

Beim erfindungsgemäßen Röhrenheizkörper ist der Herstellungsaufwand bereits wegen der einfach ausgebildeten Verbindungsstücke verringert. Insbesondere sind die beschriebenen Schwierigkeiten bei der Zuordnung der miteinander zu verschweißenden Teile vermieden. Aufgrund seiner Einteiligkeit läßt sich das Verbindungstück mit einer gleichmäßigen Umfangskontur herstellen, so daß die miteinander zu verschweißenden Ringränder bzw. -Zonen in einfacher und leichter Weise in für eine saubere und dichte Verschweißung erforderlichen Positionen aneinander angesetzt werden können. Dabei läßt sich eine dichte und saubere Verschweißung sowohl nach dem Preßstumpf-Schweißverfahren als auch nach dem Buckel-Schweißverfahren erreichen. Ein erfindungsgemäßer Röhrenheizkörper läßt sich somit nicht nur einfacher, sondern auch schneller herstellen, so daß sich die Herstellungskosten verringern lassen.

Vorteilhafte Weiterbildungen der Erfindung, die ebenfalls zur Problemlösung beitragen und außerdem verschiedene Formen bzw. Konstruktionen des Röhrenheizkörpers insbesondere in Modulbauweise ermöglichen, wodurch der Röhrenheizkörper nicht nur an vorgegebene Raumformen und Heizleistungen angepaßt werden kann, sondern sich auch unterschiedliche Konstruktionen verwirklichen lassen, sind in den Unteransprüchen beschrieben.

Es ist in der Heizkörpertechnik in anderem Zusammenhang bekannt (DE-PS 31 13 207), Anschlußteile für Heizkörper zu verwenden, die einteilig hergestellt sind, jedoch handelt es sich bei dieser bekannten Ausgestaltung um Anschlußelemente für die Zu- und Ablaufleitungen von Plattenheizkörpern. Bei einem Plattenheizkörper sind bezüglich des der Erfindung zugrunde liegenden Problems andere Voraussetzungen vorgegeben, da Verbindungsröhren mit besonderen Formgebungen im Bereich ihrer Verbindungsstellen nicht vorhanden sind. Außerdem dient das bekannte Anschlußteil dem Anschluß von Anschlußarmaturen wie Ventilen.

Ein ähnliches Anschlußelement für einen Plattenheizkörper ist auch aus der DE-AS 24 34 482 zu entnehmen. Bei dieser bekannten Ausgestaltung sind ebenfalls völlig andere Voraussetzungen im vorbeschriebenen Sinne vorgegeben. Außerdem ist dies bekannte Anschlußelement mit einer an das Anschlußelement angesetzten Rohranschlußmuffe zweiteilig gebildet, wobei die beiden Teile miteinander verschweißt sind.

Nachfolgend wird die Erfindung anhand von Ausführungsbeispielen und einer vereinfachten Zeichnung näher erläutert. Es zeigen
- Fig. 1: einen erfindungsgemäß ausgestalteten Röhrenheizkörper in perspektivischer Darstellung;
- Fig. 2: den vertikalen Teilschnitt A-B in Fig. 1;
- Fig. 3: den vertikalen Teilschnitt A-B bei abgewandelter Ausgestaltung;
- Fig. 4 bis 6: abgewandelte Ausgestaltungen bzw. Bauweisen des Röhrenheizkörpers jeweils in perspektivischer Darstellung;
- Fig. 7: einen erfindungsgemäßen Röhrenheizkörper in weiterer Abwandlung seiner Ausgestaltung bzw. Bauweise in der Vorderansicht;
- Fig. 8: den Röhrenheizkörper nach Fig. 7 in der Seitenansicht;
- Fig. 9: den Röhrenheizkörper nach Fig. 7 in der Draufsicht;
- Fig. 10: einen weiteren abgewandelten Röhrenheizkörper in der Vorderansicht;
- Fig. 11: den Röhrenheizkörper nach Fig. 10 in der Seitenansicht;
- Fig. 12: den Röhrenheizkörper nach Fig. 10 in der Draufsicht; und
- Fig. 13: eine weitere Abwandlung des erfindungsgemäßen Röhrenheizkörpers in der Vorderansicht.

Der Röhrenheizkörper 10 besteht jeweils aus einer Mehrzahl Verbindungsröhren 12 und Verbindungsstücken 14, die durch Schweißen miteinander verbunden sind und ein Strömungskanalsystem bilden. Die Verbindungsröhren 12 erstrecken sich in der normalen Aufstellung des Röhrenheizkörpers 10 üblicherweise aufrecht. Die mit den Verbindungsröhren 12 verschweißten Verbindungsstücke 14 befinden sich im Kopf- und Fußbereich des Röhrenheizkörpers 10 jeweils in einer sich in Längsrichtung des Röhrenheizkörpers 10 erstreckenden Reihe, wobei sie einen Abstand voneinander aufweisen können und mit weiteren, kurzen horizontalen Verbindungsröhren 16 oder unmittelbar miteinander verschweißt sein können. Jeweils eine Reihe der Verbindungsstücke 14 bildet das Kopfteil 18 bzw. das Fußteil 20 des Röhrenheizkörpers 10, in denen sich ein an den vorhandenen Strömungskreislauf endseitig angeschlossener Zufluß-Sammelkanal bzw. ein Abflußsammelkanal horizontal erstreckt.

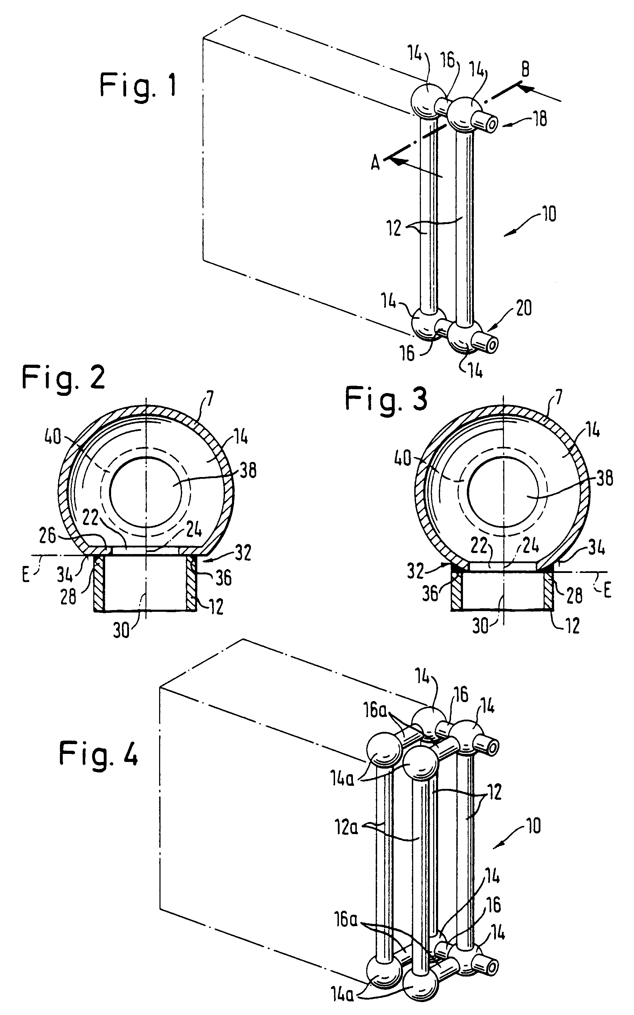

Die Verbindungsröhren 12 und die Verbindungsstücke 14 sind Bausteine jeweils gleicher Form und Größe. Die Verbindungsröhren 12 weisen eine kreisrunde Außen- und Innenquerschnittsform auf. Bei den Verbindungsstücken 14 handelt es sich um kompakte Hohlteile mit vorzugsweise gleich dicker Wandung. Die Außenform der Verbindungsstücke 14 kann mehreckig, insbesondere würfelförmig, oder kugelförmig sein. Es kommt bei der Erfindung darauf an, daß die Verbindungsröhre und das Verbindungsstück in einem in einer Ebene liegenden Kreis aneinanderstoßen und dort verschweißt werden. Jedes Verbindungsstück 14 weist in seiner Wandung 7 in der Anzahl der Anschlußstellen für die vertikalen Verbindungsröhren 12 vorhandene Löcher 22 auf, deren Längsmittelachsen 24 etwa durch den Mittelpunkt des zugehörigen, kompakten Verbindungsstücks 14 verlaufen. Bei der dargestellten, kugelförmigen Ausgestaltung der Verbindungsstücke 14 verläuft das bei der Ausgestaltung nach Fig. 1 einzige Loch 22 vertikal und dabei radial. Am Außenrand 26 des Lochs 22 ist der Endrand 28 der zugehörigen Verbindungsröhre 12 so angesetzt und verschweißt, daß die Längsmittelachse 30 der Verbindungsröhre 12 mit der Längsmittelachse 24 des Lochs 22 fluchtet und somit ebenfalls durch den Mittelpunkt des Verbindungsstücks 14 verläuft. Die Verbindungsröhre 12 schließt somit ebenfalls radial an das kugelförmige Verbindungsstück 14 an. An der mit 32 bezeichneten Stoßstelle erstrecken sich der Endrand 28 und der an letzterem anliegende Außenrand 26 in einer Stoßebene E, die sich rechtwinklig zur Längsmittelachse 30 der Verbindungsröhre 12 und zur Längsmittelachse 24 des Lochs 22 erstreckt. Das Verschweißen an der Stoßstelle 32 erfolgt nach dem Preßstumpfschweißverfahren oder dem Buckelschweißverfahren. Aufgrund der vorbeschriebenen Ausgestaltung bzw. Anordnung ergibt sich eine symmetrische bzw. radiale Zuordnung der Verbindungsröhre 12 zum Verbindungsstück 14, wobei sich bei einem Andruck symmetrische Kraftverhältnisse bzw. Belastungen an den zu verschweißenden Rändern ergeben.

Der Durchmesser des kugelförmigen Verbindungsstücks 14 ist bedeutend größer als der der Verbindungsröhre 12. Hierdurch ergibt sich eine die Verbindungsröhre 12 umgebende Ringschulter 34, die die ringförmige Schweißnaht 36 umgibt.

Gemäß Fig. 2 kann das Verbindungsstück 14 am Außenrand 26 des Loches 22 durch eine ebene Fläche abgeflacht sein, die sich rechtwinklig zu den Längsmittelachsen 24, 30 erstreckt. Bei der Ausgestaltung gemäß Fig. 3 ist eine solche Abflachung nicht vorhanden. Das Verbindungsstück 14 ist durch eine Kugel gebildet, so daß die den Außenrand 26 umgebende Außenfläche des Verbindungsstücks 14 kugelförmig gekrümmt ist. Folglich liegt der Endrand 28 an der Außen-Kugelfläche des Verbindungsstücks kreisförmig an, woraus sich eine Zentrierung für die Verbindungsröhre 12 ergibt, die deren Zuordnung zum Schweißen ebenfalls erleichtert.

In den Fig. 2 und 3 sind die sich in Längsrichtung des Röhrenheizkörpers 10 erstreckenden, hier ebenfalls radialen Löcher mit 38 bezeichnet. Sowohl in dem Fall, in dem einander benachbarte Verbindungsstücke 14 durch Verbindungsröhren 16 miteinander verbunden sind, als auch in dem Fall, in dem die Verbindungsstücke 14 in der Längsrichtung des Röhrenheizkörpers 1 unmittelbar aneinander liegen, ergeben sich an den Außenrändern 40 der Löcher 38 gleiche günstige Verhältnisse wie vorbeschrieben, so daß es einer zusätzlichen Beschreibung nicht bedarf. Es wird lediglich hervorgehoben, daß die Verbindungsstücke 14 auch an diesen Seiten wie vorbeschrieben kugelförmig oder abgeflacht sein können.

Bei der Ausgestaltung gemäß Fig. 4 ist die Grundform des Röhrenheizkörpers gemäß Fig. 1 durch weitere vertikale und horizontale Verbindungsröhren 12a und 16a ergänzt, von denen sich die Verbindungsröhren 12a parallel und in seitlichem Abstand von den Verbindungsröhren 12 an der Vorderseite erstrecken, wobei sich die Verbindungsröhren 16a horizontal in Querrichtung des Röhrenheizkörpers erstrecken. Die Verbindungsröhren 12, 12a, 16, 16a bilden jeweils eine sich in einer Querebene des Röhrenheizkörpers erstreckende Verbindungsröhrenrahmen mit jeweils einem Verbindungsstück 14a an seinen Ecken. Hierzu weisen die Verbindungsstücke 14a jeweils ein weiteres Loch 22 auf, das zu dem ersten Loch 22 in der Querebene um 90° versetzt ist. In der jeweiligen Querebene sind somit in einem horizontalen Abstand vom oberen und unteren Verbindungsstück 14 zwei weitere Verbindungsstücke 14a in spiegelsymmetrischer Anordnung vorgesehen, von denen die horizontal nebeneinander und vertikal untereinander angeordneten Verbindungsstücke 14a durch horizontale und vertikale Verbindungsröhren 12a, 16a miteinander verbunden sind. Bei dieser Ausgestaltung sind die Verbindungsstücke 14a in Längsrichtung des Röhrenheizkörpers 10 im Gegensatz zu den Verbindungsstücken 14 nicht miteinander verbunden und es fehlen auch die Löcher 38. Dabei können die horizontalen Verbindungsröhren 16a auch weggelassen werden, so daß die Verbindungsstücke 14 und 14a jeweils direkt miteinander verschweißt sind.

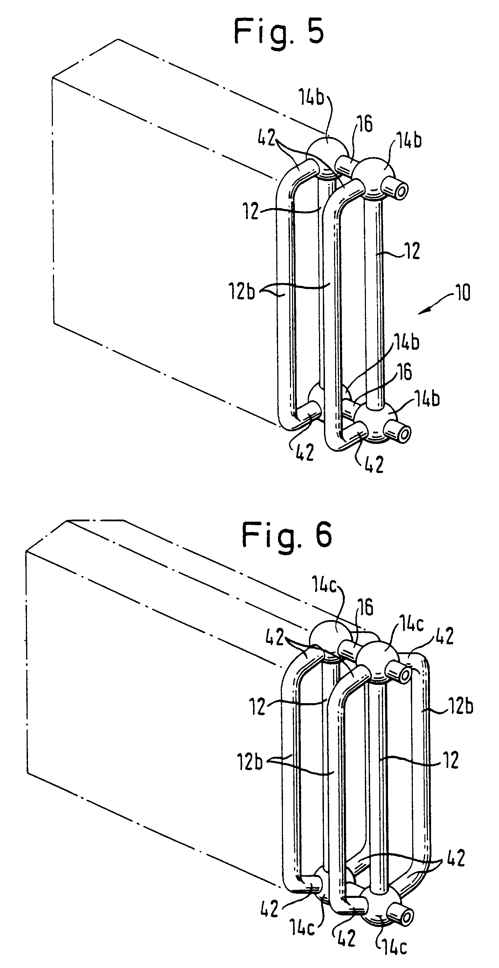

Bei der Ausgestaltung nach Fig. 5 sind anstelle der Verbindungsröhren 12a aufrechte Verbindungsröhren 12b vorgesehen, die C-förmig geformt sind, so daß die Schenkelenden 42 der Verbindungsröhren 12b sich parallel zueinander erstrecken oder einen nach hinten geöffneten spitzen Winkel einschließen, wobei die beiden sich quer zur Längsrichtung des Röhrenheizkörpers 10 erstreckenden Löcher 22 mit ihren Längsachsen den gleichen Winkel einschließen. Auch hier befinden sich die Schenkelenden 42 und die zugehörigen Löcher 22 in einer bezüglich des betreffenden Verbindungsstücks 14b radialer bzw. diagonaler Position.

Bei der Ausgestaltung nach Fig. 6 sind auf der Vorder- und Rückseite beiden Seiten des Röhrenheizkörpers U-förmige Verbindungsröhren 12b vorgesehen, wobei die Verbindungsröhren 12 vorhanden oder nicht vorhanden sein können. Demnach sind in den Verbindungsstücken 14c drei T-förmig angeordnete oder zwei einander gegenüberliegende Löcher 22 vorgesehen, wobei letztere horizontal miteinander fluchten oder in Übereinstimmung mit der Erstreckung der Schenkelenden 42 einen stumpfen Winkel miteinander einschließen.

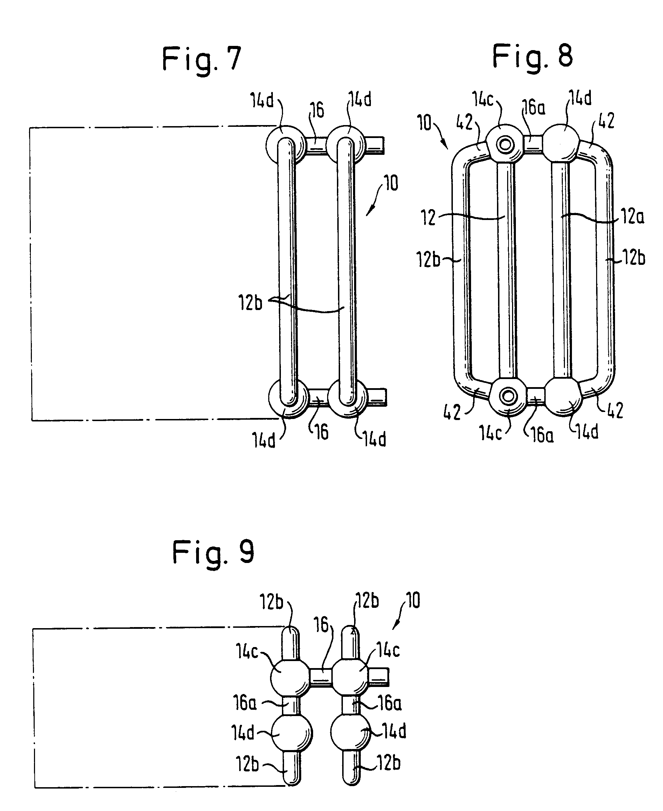

Gemäß dem Ausführungsbeispiel nach Fig. 7-9 sind bei einer der Fig. 4 entsprechenden Ausgestaltung mit zwei in einer Querebene des Röhrenheizkörpers 10 angeordneten vertikalen Verbindungsröhren 12, 12a zu beiden Seiten in der vorhandenen Querebene zwei weitere U-förmig geformte Verbindungsröhren 12b vorgesehen. Bei dieser Ausgestaltung sind in den vorderen und hinteren Verbindungsstücken 14c, 14d drei T-förmig angeordnete Löcher 22 in der vorhandenen Querebene vorgesehen, die den vertikalen und horizontalen Anschluß der zugeordneten Verbindungsröhren 12, 12a, 12b in der Querebene ermöglichen, so daß in den Querebenen der Verbindungsstücke jeweils vier aufrechte Verbindungsröhren 12, 12a, 12b angeordnet werden können. In den Verbindungsstücken 14d fehlen die sich in der Längsrichtung erstreckenden Löcher 38.

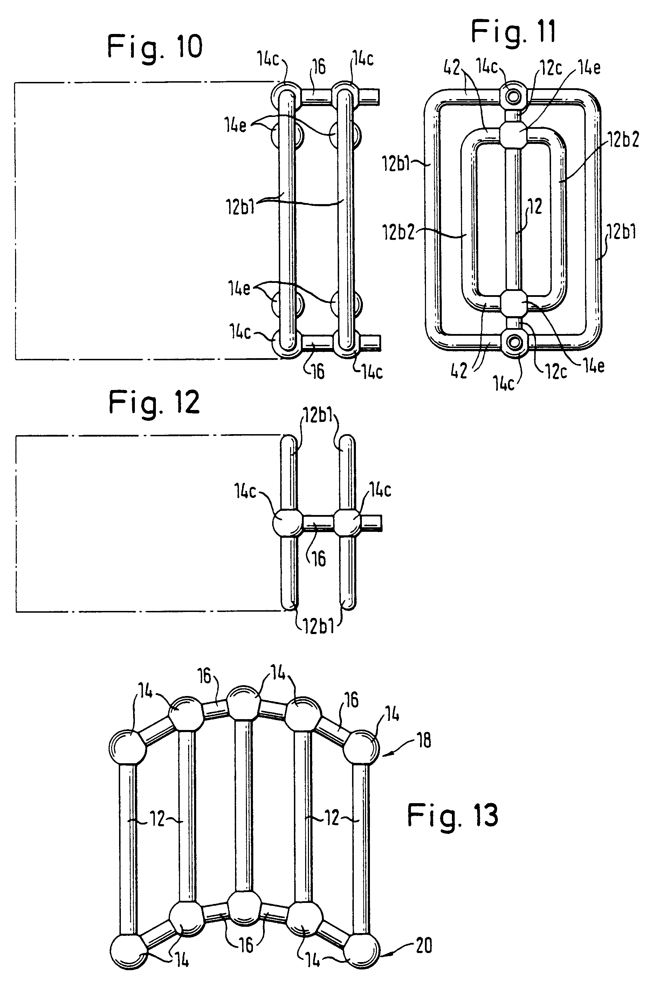

Die Ausgestaltung bzw. Bauform gemäß Fig. 10 bis 12 umfaßt eine weitere Ergänzung der bisher beschriebenen Bauweisen, wobei in jeder Querebene der oberen und unteren Verbindungsstücke zwei jeweils in sich geschlossene Verbindungsröhrenrahmen konzentrisch vorgesehen sind. Hierzu sind jeweils zwei obere und zwei untere Verbindungsstücke 14c, 14e übereinander angeordnet, wobei das obere und das untere Verbindungsstückpaar 14c, 14e jeweils durch eine weitere kurze Verbindungsröhre 12c miteinander verbunden sind. Außerdem sind vier U-förmig geformte Verbindungsröhren 12b vorgesehen, von denen die jeweils äußeren in ihrer Größe so groß geformt sind, daß sie die inneren, koaxial angeordneten inneren Verbindungsröhren in der Querebene mit Abstand umgeben. Die jeweils äußeren Verbindungsröhren 12b1 weisen hierzu längere Steg- und Schenkelabschnitte auf als die inneren Verbindungsröhren 12b2. Bei dieser Ausgestaltung weisen die Verbindungsstücke 14e jeweils vier kranzförmig angeordnete Löcher 22 auf, mit denen sie an die vertikalen kurzen sowie die beiden U-förmigen Verbindungs- und an die zentrale Verbindungsröhre 12 angeschlossen sind. Die inneren Verbindungsstücke 14e weisen keine Löcher 38 auf und sind in Längsrichtung des Röhrenheizkörpers auch nicht miteinander verbunden.

Bei allen vorbeschriebenen Ausgestaltungen schließen die Enden der Verbindungsröhren radial bzw. mittig zum zugehörigen Verbindungsstück an dieses Verbindungsstück an, wodurch die bereits beschriebenen Vorteile erreicht werden.

Im Rahmen der Erfindung ist es möglich, auf den vorbeschriebenen Ausgestaltungen beruhende weitere Variationen der Bauform des Röhrenheizkörpers 10 vorzunehmen. Zum Beispiel können bei den Ausgestaltungen gemäß den Fig. 4 bis 12 die Verbindungsröhren 12 weggelassen werden. Außerdem kann z.B. bei den Ausgestaltungen gemäß Fig. 6 bis 12 nur jeweils eine Seite, insbesondere die Vorderseite des Röhrenheizkörpers 10 in der dargestellten Ausbildung verwirklicht sein, wie es beispielsweise Fig. 4 zeigt. Ferner können die Ausgestaltungen gemäß Fig. 4 und 11 nur auf der Vorder- und/oder Rückseite angeordnet sein. Insgesamt wird ein modularer Aufbau ermöglicht, wodurch sich vielfältige Gestaltungsmöglichkeiten ergeben, z. B. mehrere Reihen oder Lagen, horizontale oder vertikale Anordnung, gleichmäßige oder ungleichmäßige gitterförmige Anordnungen und dergleichen mehr. Insbesondere lassen sich kostengünstig Sonderanfertigungen für bestimmte Einsatzzwecke, beispielsweise ungewöhnlich geformte Räume, in denen die Röhrenheizkörper angebracht werden sollen, herstellen.

Bei allen Ausführungsbeispielen lassen sich auch in der Längsrichtung des Röhrenheizkörpers 10 gekrümmte Formgebungen verwirklichen, wie es die Fig. 13 zeigt. Bei einer solchen Ausgestaltung sind im Bereich des Kopfteils 18 und im Bereich des Fußteils 20 gleich lange oder unterschiedlich lange, sich in Längsrichtung erstreckende Verbindungsröhren 16 vorzusehen, wobei die Längsmittelachsen dieser Verbindungsröhren 16 gegeneinander abgewinkelt angeordnet sind.

Dabei können bei allen Ausgestaltungen die Verbindungsstücke im Bereich der Außenränder 26 der Löcher 22 kugelförmig gekrümmt sein oder abgeflacht sein, wie es bereits beschrieben worden ist. Bei einer nicht abgeflachten Ausgestaltung der Verbindungsstücke, bei der der Endrand 28 der jeweiligen Verbindungsröhre 12 an einer kugelförmigen Fläche des Verbindungstücks 14 anliegt, ergibt sich der weitere Vorteil, daß das Verbindungsstück 14 und die Verbindungsröhre 12 innerhalb eines durch die Größe des Lochs 22 und die Größe des Verbindungsröhrenquerschnitts bestimmtes Bewegungsspiel gegeneinander verschoben angeschweißt werden können, so daß die Längsmittelachsen 24, 30 gegeneinander abknicken. Hierdurch ist eine Anpassung der Teile zueinander ermöglicht, die auch Krümmungen im Sinne der Ausgestaltung nach Fig. 13 zuläßt, ohne daß die Verbindungsstücke 14 anders ausgestaltet werden müssen.

Für das erfindungsgemäße Verfahren gelten die voranstehenden Ausführungen sinngemäß.

## Patentansprüche

1. Röhrenheizkörper mit mehreren, jeweils als Hohlteil ausgebildeten Verbindungstücken, die jeweils keinen Rohrstutzen zum Anschluß einer Verbindungsröhre aufweisen, und die an Stoßstellen direkt miteinander oder über Rohrstücke zur Ausbildung zweier Sammelkanäle verschweißt sind, die durch Verbindungsröhren miteinander verbunden sind, wobei jeweils der Endrand der Verbindungsröhre im Verbindungsbereich an einer Anlageringzone des Verbindungsstücks anliegt,
dadurch **gekennzeichnet**,
daß der Endrand (28) der Verbindungsröhre (12, 12a, 12b, 12c) und die Anlageringzone (26) des Verbindungsstücks (14, 14a, 14b, 14c, 14d, 14e) in einer sich rechtwinklig zur Längsmittelachse (30) des an das Verbindungsstück anschließenden Endabschnitts der Verbindungsröhre erstreckenden Ebene (E) angeordnet sind.

2. Röhrenheizkörper nach Anspruch 1, dadurch **gekennzeichnet**, daß die Ebene (E) rechtwinklig zur Radialrichtung des Verbindungsstücks (14) angeordnet ist.

3. Röhrenheizkörper nach Anspruch 1 oder 2, dadurch **gekennzeichnet**, daß die Anlageringzone bzw. die der Verbindungsröhre (12) zugewandte Außenfläche des Verbindungsstücks (14) die Verbindungsröhre radial nach außen überragt.

4. Röhrenheizkörper nach Anspruch 3, dadurch **gekennzeichnet**, daß das Verbindungsstück (14) im Querschnitt größer bemessen ist als die Verbindungsröhre (12).

5. Röhrenheizkörper nach einem oder mehreren der vorhergehenden Ansprüche, dadurch **gekennzeichnet**, daß das Verbindungsstück (14) außen und vorzugsweise auch innen kugelförmig geformt ist.

6. Röhrenheizkörper nach einem oder mehreren der vorhergehenden Ansprüche, dadurch **gekennzeichnet**, daß die der Verbindungsröhre (12) zugewandte Außenfläche des Verbindungsstücks (14) eine ebene Fläche oder eine Abflachung ist.

7. Röhrenheizkörper nach einem oder mehreren der vorhergehenden Ansprüche, dadurch **gekennzeichnet**, daß die Verbindungsröhre (12) eine kreisrunde Querschnittsform und vorzugsweise eine gleich dicke Wandung aufweist.

8. Röhrenheizkörper nach einem oder mehreren der vorhergehenden Ansprüche, dadurch **gekennzeichnet**, daß das Verbindungsstück (14) eine konstante Wandstärke aufweist.

9. Röhrenheizkörper nach einem oder mehreren der vorhergehenden Ansprüche, dadurch **gekennzeichnet**, daß die Längsmittelachse (30) zumindest im Bereich des Endes der Verbindungsröhre (12) etwa durch den Mittelpunkt des Verbindungsstücks (14) verläuft oder radial bzw. diametral zum Verbindungsstück (14) angeordnet ist.

10. Röhrenheizkörper nach einem oder mehreren der vorhergehenden Ansprüche, dadurch **gekennzeichnet**, daß die Längsmittelachse (24) des von der Anlageringzone (26) umgebenen Lochs (22) etwa durch den Mittelpunkt des Verbindungsstücks (14) verläuft oder radial bzw. diametral zum Verbindungsstück angeordnet ist.

11. Röhrenheizkörper nach einem oder mehreren der vorhergehenden Ansprüche, dadurch **gekennzeichnet**, daß die Verbindungsstücke (14, 14a, 14b, 14c, 14d, 14e) in Längsrichtung des Röhrenheizkörpers (10) verlaufende Löcher (38) in ihren Wandungen aufweisen, deren Randbereiche mit sich in der Längsrichtung erstreckenden Verbindungsröhren (16) verschweißt sind oder unmittelbar aneinander anliegen und miteinander verschweißt sind.

12. Röhrenheizkörper nach Anspruch 11 dadurch **gekennzeichnet**, daß die oberen und unteren Verbindungsstücke (14, 14a, 14b, 14c, 14d, 14e) auf ihren einander zugewandten Seiten jeweils wenigstens ein Loch (22) aufweisen, in dessen Randbereich sie durch jeweils eine vertikale Verbindungsröhre (12) miteinander verbunden sind.

13. Röhrenheizkörper nach Anspruch 11 oder 12, dadurch **gekennzeichnet**, daß die oberen und unteren Verbindungsstücke (14, 14a, 14b, 14c) an ihrer Vorder- und/oder Rückseite jeweils ein Loch (22) aufweisen, daß auf der Seite bzw. Seiten, auf denen die zusätzlichen Löcher (22) angeordnet sind, im horizontalen Abstand von den ersten Verbindungsstücken (14) zweite Verbindungsstücke (14a) angeordnet sind, die bezüglich der Löcher (22) gleich ausgestaltet, jedoch spiegelbildlich angeordnet sind und durch horizontale Verbindungsröhren (16a) mit den ersteren Verbindungsstücken (14) sowie vertikalen Verbindungsröhren (12a) miteinander verbunden sind (Fig. 4).

14. Röhrenheizkörper nach Anspruch 11 oder 12, dadurch **gekennzeichnet,** daß die übereinander angeordneten Verbindungsstücke (14) an ihren Vorder- und/oder Rückseiten jeweils ein Loch (22) aufweisen und durch C-förmig geformte Verbindungsröhren (12b) miteinander verbunden sind.

15. Röhrenheizkörper nach Anspruch 13 oder 14, dadurch **gekennzeichnet**, daß die oberen und unteren, sich quer zur Längsrichtung des Röhrenheizkörpers (10) erstreckenden Verbindungsröhren (16) oder die freien Enden der U-förmig geformten Verbindungsröhren (12b) einen spitzen bzw. stumpfen Winkel zwischen sich einschließen.

16. Röhrenheizkörper nach einem oder mehreren der Ansprüche 12 bis 15, dadurch **gekennzeichnet,** daß die zweiten Verbindungsstücke (14d) an ihren Außenseiten jeweils ein weiteres Loch (22) aufweisen und die übereinander angeordneten zweiten Verbindungsstücke (14d) im Bereich dieser Löcher (22) durch C-förmige Verbindungsröhren (14d) miteinander verbunden sind (Fig. 8).

17. Röhrenheizkörper nach einem oder mehreren der vorhergehenden Ansprüche, dadurch **gekennzeichnet**, daß jeweils zwei obere und zwei untere Verbindungsstücke (14c, 14e) übereinander angeordnet sind, die auf ihren einander zugewandten Seiten Löcher (22) aufweisen und im Bereich dieser Löcher durch vertikale Verbindungsrohre (12, 12c) miteinander verbunden sind, daß die oberen und unteren Verbindungsstücke (14c, 14e) an der Vorderund/oder Rückseite jeweils ein weiteres Loch (22) aufweisen und im Bereich dieser Löcher durch einoder mehrteilige C-förmige Verbindungsröhren (12b1, 12b2) unterschiedlicher Größe miteinander verbunden sind, wobei sich die kleinere dieser Verbindungsröhren (12b2) von dem höher gelegenen unteren Verbindungsstück (14e) zum tieferen oberen Verbindungsstück (14e) erstreckt und die größeren Verbindungsröhren (12b1) sich vom tieferen unteren Verbindungsstück (14c) bis zum höheren oberen Verbindungsstück (14c) erstrecken und die kleineren Verbindungsröhren (12b2) in einem Abstand umgeben (Fig. 11).

18. Röhrenheizkörper nach einem oder mehreren der vorhergehenden Ansprüche, dadurch **gekennzeichnet,** daß die sich in der Längsrichtung des Röhrenheizkörpers (10) erstreckenden Verbindungsröhren (16) horizontal oder vertikal relativ zueinander abgeknickt angeordnet sind, so daß ihre Längsmittelachsen spitze Winkel einschließen.

19. Verfahren zur Herstellung eines Röhrenheizkörpers nach einem der voranstehenden Ansprüche, mit zumindest zwei Sammelkanälen, die Verbindungsstücke aufweisen, und mit zwischen den Verbindungsstücken angeordneten, jeweils die Sammelkanäle verbindenden Verbindungsröhren, **gekennzeichnet** durch folgende Schritte:
a) Anordnen des jeweiligen Endrands (28) einer Verbindungsröhre (12) und einer Anlageringzone (26) des jeweiligen Verbindungsstückes (14) in einer sich rechtwinklig zur Längsmittelachse (24) des Endabschnitts der Verbindungsröhre erstreckenden Ebene (E); und
b) Verbinden des Endrands (28) mit der Anlageringzone (26) mittels Buckelschweißen oder Preßstumpfschweißen.

20. Verfahren nach Anspruch 19, dadurch **gekennzeichnet,** daß die Verbindungsstücke im wesentlichen kugelförmig sind.

## Claims

1. Tube radiator, comprising a plurality of connecting pieces in the form of hollow parts which have no sockets for connection to a connecting tube and which are welded directly together at abutting joints or via pipe sections in order to form two headers which are connected together by connecting tubes, each end rim of the connecting tube bearing against an annular bearing zone of the connecting piece in the connecting region, characterised in that the end rim (28) of the connecting tube (12, 12a, 12b, 12c) and the annular bearing zone (26) of the connecting piece (14, 14a, 14b, 14c, 14d, 14e) are arranged in a plane (E) extending at right angles to the longitudinal central axis (30) of the end section of the connecting tube adjacent to the connecting piece.

2. Tube radiator according to claim 1, characterised in that the plane (E) is arranged at right angles to the radial direction of the connecting piece (14).

3. Tube radiator according to claim 1 or claim 2, characterised in that the annular bearing zone or the outer face of the connecting piece (14) directed towards the connecting tube (12) projects radially outwards from the connecting tube.

4. Tube radiator according to claim 3, characterised in that the connecting piece (14) has a larger cross section than the connecting tube (12).

5. Tube radiator according to one or more of the preceding claims, characterised in that the connecting piece (14) is spherical on the outside and preferably also on the inside.

6. Tube radiator according to one or more of the preceding claims, characterised in that the outer face of the connecting piece (14) directed towards the connecting tube (12) is a flat surface or a flattened area.

7. Tube radiator according to one or more of the preceding claims, characterised in that the connecting tube (12) has a circular cross section and preferably has a wall of uniform thickness.

8. Tube radiator according to one or more of the preceding claims, characterised in that the connecting piece (14) has a constant wall thickness.

9. Tube radiator according to one or more of the preceding claims, characterised in that the longitudinal central axis (30) extends substantially through the centre of the connecting piece (14) at least in the region of the end of the connecting tube (12) or is arranged radially or diametrically relative to the connecting piece (14).

10. Tube radiator according to one or more of the preceding claims, characterised in that the longitudinal central axis (24) of the hole (22) surrounded by the annular bearing zone (26) extends substantially through the centre of the connecting piece (14) or is arranged radially or diametrically relative to the connecting piece.

11. Tube radiator according to one or more of the preceding claims, characterised in that the connecting pieces (14, 14a, 14b, 14c, 14d, 14e) have holes (38) in their walls extending in the longitudinal direction of the tube radiator (10), the rim regions of said holes being welded to connecting tubes (16) extending in the longitudinal direction or being directly adjacent to one another and being welded together.

12. Tube radiator according to claim 11, characterised in that the upper and lower connecting pieces (14, 14a, 14b, 14c, 14d, 14e) each have at least one hole (22) on their sides directed towards one another, in the rim region of which they are connected together by means of a vertical connecting tube (12).

13. Tube radiator according to claim 11 or claim 12, characterised in that the upper and lower connecting pieces (14, 14a, 14b, 14c) each have a hole (22) on their front and/or rear, and that second connecting pieces (14a) are arranged on the side or sides on which the additional holes (22) are arranged at a horizontal distance from the first connecting pieces (14), said second connecting pieces being of identical design with respect to the holes (22), but in a mirror-inverted arrangement and being connected to the first connecting pieces (14) by horizontal connecting tubes (16a) and to one another by vertical connecting tubes (12a) (Fig. 4).

14. Tube radiator according to claim 11 or claim 12, characterised in that the connecting pieces (14) arranged on top of one another each have a hole (22) on their front and/or rear and are connected together by C-shaped connecting tubes (12b).

15. Tube radiator according to claim 13 or claim 14, characterised in that the upper and lower connecting tubes (16) extending transversely to the longitudinal direction of the tube radiator (10) or the free ends of the U-shaped connecting tubes (12b) include an acute or obtuse angle.

16. Tube radiator according to one or more of claims 12 to 15, characterised in that the second connecting pieces (14d) each have a further hole (22) on their outer faces and the second connecting pieces (14d) arranged on top of one another are connected together in the region of these holes (22) by C-shaped connecting tubes (14d) (Fig. 8).

17. Tube radiator according to one or more of the preceding claims, characterised in that two upper and two lower connecting pieces (14c, 14e) are arranged on top of one another, have holes (22) on their sides directed towards one another and are connected together in the region of these holes by vertical connecting tubes (12, 12c), and that the upper and lower connecting pieces (14c, 14e) each have a further hole (22) on their front and/or rear and are connected together in the region of these holes by one-piece or multiple-piece C-shaped connecting tubes (12b1, 12b2) of different sizes, the smaller of these connecting tubes (12b2) extending from the lower connecting piece (14e) arranged in a higher position to the upper connecting piece (14e) arranged in a lower position and the larger connecting tubes (12b1) extending from the lower connecting piece (14c) arranged in a lower position to the upper connecting piece (14c) arranged in a higher position and surrounding the smaller connecting tubes (12b2) at a distance (Fig. 11).

18. Tube radiator according to one or more of the preceding claims, characterised in that the connecting tubes (16) extending in the longitudinal direction of the tube radiator (10) are arranged so that they are bent horizontally or vertically relative to one another so that their longitudinal central axes include acute angles.

19. Process for the manufacture of a tube radiator according to one of the preceding claims, comprising at least two headers having connecting pieces and comprising connecting tubes arranged between the connecting pieces and connecting the headers, characterised by the following steps:
a) arranging the respective end rim (28) of a connecting tube (12) and an annular bearing zone (26) of the respective connecting piece (14) in a plane (E) extending at right angles to the longitudinal central axis (24) of the end section of the connecting tube, and
b) connecting the end rim (28) to the annular bearing zone (26) by means of projection welding or pressure butt welding.

20. Process according to claim 19, characterised in that the connecting pieces are substantially spherical.

## Revendications

1. Radiateur tubulaire présentant plusieurs pièces de jointure, conçues chacune comme une pièce creuse, qui ne présentent pas de tubulure pour le raccordement d'un tube de jointure et qui sont directement soudées entre elles aux jointures ou par des pièces tubulaires destinées à la formation de deux collecteurs reliés entre eux par des tubes de jointure, le bord externe du tube de jointure étant dans chaque cas adjacent à une zone annulaire de contact aux points de jonction, caractérisé en ce que, le bord externe (28) du tube de jointure (12, 12a, 12b, 12c) et la zone annulaire de contact (26) de la pièce de jointure (14, 14a, 14b, 14c, 14d, 14e) sont disposés dans un plan (E) s'étendant perpendiculairement à l'axe médian longitudinal (30) de la section terminale du tube de jointure, adjacente à la pièce de jointure.

2. Radiateur tubulaire selon la revendication 1, caractérisé en ce que le plan (E) est disposé perpendiculairement à la direction radiale de la pièce de jointure (14).

3. Radiateur tubulaire selon l'une quelconque des revendications 1 ou 2, caractérisé en ce que la zone annulaire de contact ou la face extérieure tournée vers le tube de jointure (12) de la pièce de jointure (14) fait saillie vers l'extérieur par rapport au tube de jointure.

4. Radiateur tubulaire selon la revendication 3, caractérisé en ce que les dimensions de la section de la pièce de jointure (14) sont supérieures à celles du tube de jointure (12).

5. Radiateur tubulaire selon l'une ou plusieurs des revendications précédentes, caractérisé en ce que la pièce de jointure (14) reçoit une forme sphérique a l'extérieur et de préférence également à l'intérieur.

6. Radiateur tubulaire selon une ou plusieurs des revendications précédentes, caractérisé en ce que la face extérieure tournée vers le tube de jointure (12) de la pièce de jointure (14) est une surface plane ou aplatie.

7. Radiateur tubulaire selon une ou plusieurs des revendications précédentes, caractérisé en ce que le tube de jointure (12) présente une variante de section circulaire et de préférence une paroi de même épaisseur.

8. Radiateur tubulaire selon une ou plusieurs des revendications précédentes, caractérisé en ce que la pièce de jointure (14) présente une épaisseur de paroi constante.

9. Radiateur tubulaire selon une ou plusieurs des revendications précédentes, caractérisé en ce que l'axe médian longitudinal (30) s'étend au moins dans la région de l'extrémité du tube de jointure (12) approximativement au travers du point médian de la pièce de jointure (14) ou est disposé radialement ou diamétralement à la pièce de jointure (14).

10. Radiateur tubulaire selon une ou plusieurs des revendications précédentes, caractérisé en ce que l'axe médian longitudinal (24) de l'ouverture (22) entourée par la zone annulaire de contact (26) s'étend approximativement au travers du point médian de la pièce de communication (14) ou est disposé radialement ou diamétralement à la pièce de jointure.

11. Radiateur tubulaire selon une ou plusieurs des revendications précédentes, caractérisé en ce que les pièces de jointure (14, 14a, 14b, 14c, 14d, 14e) présentent dans leurs parois des ouvertures (38) s'étendant dans la direction longitudinale du radiateur tubulaire (10), dont les bords sont soudés par des tubes de jointure (16) s'étendant longitudinalement ou affrontés directement l'un à l'autre, puis soudés l'un à l'autre.

12. Radiateur tubulaire selon la revendication 11, caractérisé en ce que les pièces de jointure supérieures et inférieures (14, 14a, 14b, 14c, 14d, 14e) présentent sur leurs faces opposées au moins une ouverture (22), dans la région du bord de laquelle elles sont reliées entre elles par un tube de jointure (12) vertical.

13. Radiateur tubulaire selon l'une quelconque des revendications 11 ou 12, caractérisé en ce que les pièces de jointure supérieures et inférieures (14, 14a, 14b, 14c, 14d, 14e) présentent sur leur face antérieure et/ou postérieure respectivement une ouverture (22), en ce que sur la ou les faces sur lesquelles sont situées les ouvertures supplémentaires (22), sont disposées, à distance horizontale des premières pièces de jointure (14), des deuxièmes pièces de jointure (14a) de même conception par rapport aux ouvertures (22), mais toutefois disposées symétriquement et reliées par des tubes de jointure horizontaux (16a) aux premières pièces de jointure (14) ainsi que reliées entre elles par des tubes de jointure verticaux (12a) (Fig. 4).

14. Radiateur tubulaire selon l'une quelconque des revendications 11 ou 12, caractérisé en ce que les pièces de jointure superposées (14) présentent respectivement une ouverture (22) sur leur face antérieure et/ou postérieure et sont reliées entre elles par des tubes de jointure (12b) en forme de C.

15. Radiateur tubulaire selon l'une quelconque des revendications 13 ou 14, caractérisé en ce que les tubes de jointure (16) supérieurs et inférieurs, s'étendant transversalement à l'axe longitudinal du radiateur tubulaire (10), ou les extrémités libres des tubes de jointure (12b) en forme de U présentent dans leur intervalle un angle aigu ou un angle obtus.

16. Radiateur tubulaire selon une ou plusieurs des revendications 12 à 15, caractérisé en ce que les deuxièmes pièces de jointure (14d) présentent sur leurs faces extérieures une autre ouverture (22) et les deuxièmes pièces de jointure (14d) superposées sont reliées entre elles dans la région de ces ouvertures (22) par des tubes de jointure (14d) en forme de C (Fig. 8).

17. Radiateur tubulaire selon une ou plusieurs des revendications précédentes, caractérisé en ce que respectivement deux pièces de jointure supérieures et deux pièces de jointure inférieures (14c, 14e) sont superposées et présentent des ouvertures (22) sur leurs faces opposées et sont reliées entre elles à l'endroit de ces ouvertures par des tubes de jointure verticaux (12, 12c), en ce que les pièces de jointure (14c, 14e) supérieures et inférieures présentent une autre ouverture (22) sur la face antérieure ou postérieure et qu'elles sont reliées entre elles dans la région de ces ouvertures par des tubes de jointure (12b1, 12b2) en forme de C d'une ou plusieurs pièces de dimensions différentes, le plus petit de ces tubes de jointure (12b2) s'étendant depuis la pièce de jointure (14e) inférieure plus élevée jusqu'à la pièce de jointure (14e) supérieure plus profonde et les tubes de jointure de plus grandes dimensions (12b1) s'étendant depuis la pièce de jointure inférieure (14c) plus profonde jusqu'à la pièce de jointure supérieure (14c) plus élevée et entourant à distance les tubes de jointure plus petits (12b2) (Fig. 11).

18. Radiateur tubulaire selon une ou plusieurs des revendications précédentes, caractérisé en ce que les tubes de jointure (16) s'étendant dans le sens longitudinal du radiateur tubulaire (10) sont disposés horizontalement et verticalement pour former un coude l'un par rapport à l'autre, de sorte que leurs axes médians longitudinaux dessinent un angle aigu.

19. Procédé pour la fabrication d'un radiateur tubulaire selon l'une quelconque des revendications précédentes, possédant au moins deux collecteurs qui présentent des pièces de jointure et possédant des tubes de jointure reliant les collecteurs et disposés entre les pièces de jointure, caractérisé par les phases suivantes:
a) disposition du bord externe (28) d'un tube de jointure (12) et d'une zone annulaire de contact (26) de chaque pièce de jointure (14) dans un plan (E) s'étendant perpendiculairement à l'axe médian longitudinal (24) de la section terminale du tube de jointure, et
b) jonction du bord externe (28) à la zone annulaire de contact (26) par un soudage à bossages ou un soudage bout à bout par compression.

20. Procédé selon la revendication 19, caractérisé en ce que les pièces de jointure sont essentiellement sphériques.
